# EUROPEAN PATENT SPECIFICATION

(11) **EP 3 500 113 B1**
(45) Date of publication and mention of the grant of the patent: **18.11.2020**
(21) Application number: 17761037.5
(22) Date of filing: 21.08.2017
(51) Int. Cl.: A23L 27/27

(54) **METHOD FOR SMOKING LIQUIDS AND DEVICE THEREFOR**
VERFAHREN ZUM RÄUCHERN VON FLÜSSIGKEITEN UND VORRICHTUNG DAFÜR
PROCÉDÉ DE FUMAGE DE LIQUIDES ET DISPOSITIF CORRESPONDANT

(30) Priority: 19.08.2016 EP 16185032; 30.01.2017 GB 201701492
(43) Date of publication of application: 26.06.2019
(73) Proprietor: Puresmoke Limited, Arundel, West Sussex BN18 0HY (GB)
(72) Inventor: GRIFFITHS, Huw David, Arundel West Sussex BN18 0HY (GB); CRISTEA, Elena, Bognor Regis West Sussex PO21 2JH (GB)
(74) Representative: Schlich, George
(86) International application number: PCT/EP2017/071058
(87) International publication number: WO 2018/033648

(56) References cited:
- WO-A1-2015/007742
- US-A- 4 278 694
- US-A1- 2012 207 898

## Description

### Introduction

The present invention relates to a method for smoking liquids and to a device therefor, especially to methods for smoking water to make smoked water or brine for flavouring food. Apparatus to carry out the smoking methods are also provided.

### Background to the Invention

Prior art water smoking methods are known, using large trays of water in a static smoking chamber, the water becoming slowly infused by smoke over a number of days, typically about 3-4. "Smoked water" is a commercially available product in the food industry.

Another known prior art process produces concentrated smoke condensate by condensing water vapour in a smoking tower, usually coated with tar by long term exposure to smoke. This condensate is then diluted by the customer according to its end use; it normally produces a bitter and/or acrid taste. "Liquid smoke", much more concentrated than smoked water, is also commercially available in this industry.

There are other non-commercial methods of making "liquid smoke". One example involves collecting the smoke condensate in a bowl placed on top of a chimney using ice.

US 2012/0207898 describes a hermetically sealed system and related method for smoking liquids. Smoke is produced and re-circulated in limited supply, in an attempt to conserve fuel. The smoke inside the system is cooled, in order to promote mixing of the smoke into the liquid. As smoke is produced by burning of fuel, the pressure in the system starts to increase. This method therefore requires specialist equipment to cope with the increased pressure in the system. A valve and a limited air supply are present, in order to avoid the pressure in the system from rising to levels that the equipment is not suitable to handle. Nevertheless, the pressurised system is more dangerous than conventional smoking methods, e.g. using water trays. US 2012/0207898 describes smoking water, whereas US 4,278,694 describes a smoked propylene glycol.

The known smoking methods typically require long production times.

It is an object of the invention to provide alternative methods of smoking liquids, and methods of smoking carried out on alternative liquids. Preferred embodiments of the invention aim to provide improved smoking methods, apparatus therefor and products obtained thereby. Specific embodiments of the invention provide smoking methods with reduced operating times and/or improved outputs. An additional object of the present invention is to provide a fast, reliable and safe smoking method under atmospheric pressure.

### Summary of the Invention

The inventors of the present invention have found that water can be smoked with improved efficiency, whether to make smoked water or a product more like liquid smoke (i.e. much more concentrated) and that such smoking methods can be applied to previously unsmoked liquids.

Accordingly, in a first aspect of the invention there is provided a method of treating a solution, comprising:
(i) providing a source of smoke,
(ii) providing a smoking vessel (e.g. pan) containing the solution, and
(iii) introducing bubbles of smoke into the solution while agitating the solution so as to break up the introduced smoke into a plurality of smaller bubbles;
characterised in that there is no recirculation of off-gas back through the solution.

The methods are especially useful for making smoked water and/or brine for flavouring food. The solution is hence suitably aqueous and may be water and may comprise water and optional other components. In the context of the present invention, brine is hence a flavoured solution suitable for imparting flavour to food, e.g. by soaking food in the brine or applying the brine to food; meat is flavoured by soaking in brine. It is aqueous, but not necessarily just containing water, and may comprise salt (usually sodium chloride) and/or sugar. Salt concentration, when present, may range from 1% by weight or from 2% by weight upwards, more generally from about 3.5% (about seawater concentration) and may range up to about 26% (a typical saturated solution, depending on temperature, and hence at the upper limit of salt concentration). Apart from the optional salt and sugar, brine may also contain other optional flavourings and preservatives, e.g. spices, botanicals and curing salts; the choice of these does not form part of the invention.

Similarly, brining herein refers to a process in which food is flavoured with brine, most commonly by soaking the food, and typically in which meat is soaked, optionally before cooking. Brining duration is dependent upon brine concentration and the end flavour or intensity desired. The invention provides methods of making brine and flavouring food in the brine.

The methods are also useful for smoking other liquids. The solution may therefore be non-aqueous and may comprise or consist of other liquids including oils and waxes; references to solutions therefore include pure oils, i.e. liquids, but the term solution is used to embrace optional other components included therein. Smoking of solvents for use in food flavourings is also provided by the invention, e.g. smoking of propylene glycol, triacetin and triethyl citrate.

It is preferred that the methods comprise filtering the smoke to reduce its PAH content.

The invention provides new products, including smoked water and brine and smoked liquids made by a method of the invention.

The invention similarly provides apparatus for treating a solution (e.g. comprising water and optional other components to make brine for flavouring food), comprising:
a smoke chamber having an air input and a smoke output and in which fuel can be combusted to generate smoke;
a smoking vessel (e.g. pan) capable of holding the solution to be treated;
a mixer for mixing contents of the smoking vessel; and
a conduit from the output of the smoke chamber to the smoking vessel with an exit for introducing the smoke into the solution, below the surface of the solution;
wherein the mixer is adapted to agitate the solution so as to break up the introduced smoke into bubbles;
characterised in that there is no conduit permitting recirculation of off-gas back through the solution.

Again, preferred apparatus uses or comprises a PAH filter for filtering the smoke before it is introduced into the solution. Preferably, the mixer is adapted to agitate the solution and bubbles so as to break up the introduced smoke into a plurality of bubbles.

In addition to improving smoking time, the methods and apparatus can increase the interaction between smoke aromatics and water molecules (due to fine bubbles produced), resulting in a more complex flavour profile.

### Details of the Invention

Methods of the invention treat a solution (e.g. comprising water and optional other components) by:
(i) providing a source of smoke,
(ii) providing a smoking vessel (e.g. pan) containing the solution, and
(iii) introducing bubbles of smoke into the solution while agitating the solution so as to break up the introduced smoke into a plurality of smaller bubbles;
   characterised in that there is no recirculation of off-gas back through the solution.

Solutions to be smoked may be water or may comprise aqueous solutions also containing e.g. salt, curing salt, sugar, spices and/or other flavours. Such flavours can also be added after smoking. Methods of the invention also include smoking flavoured aqueous solutions, especially water, and still further include smoking these while mixing with flavourings introduced into the smoking vessel. Other aqueous solutions can be smoked, including for example milk (such as for cheese manufacture), beverages in general, specifically beer, cider, whiskey, soups, stock, sauces, marinades, glazes etc.

The non-aqueous solutions to be smoked include solutions containing or consisting of oils and waxes, with and without optional components such as flavourings. They can be mixtures of oils and/or waxes. Oil has been smoked in examples below using the Y-tron® mixer, using both unfiltered and filtered smoke. Those runs were at room temperature (20-25°C). For some solutions comprising oils it is optional to heat the solution to assist smoking. Waxes can be smoked once heated to melt them, though care is taken not to heat them too close to decomposition temperatures. Specifically, sunflower oil has been smoked. When smoking oils, it is preferred to use oils with greater heat resistance that are less prone to degradation and/or oxidation during smoking. Antioxidants can be used to lower the susceptibility of oils to oxidation. As discussed elsewhere, agitation levels for smoking such solutions can be adjusted to keep smoke waste to a minimum by adjustment of smoke flow, mixer energy (speed), solution volume and other parameters. Oils can be smoked e.g. for food use. Waxes can be smoked e.g. for use in candles.

Smoked oil is believed to be rendered more stable by the smoking, hence it is desirable to smoke the oil sufficiently to achieve the smokey flavour and the increased stability whilst avoiding causing oxidation of the oil.

Methods of the invention optionally include monitoring progress of smoking. The monitoring can comprise monitoring to detect development of impurities or undesired smoking products. To monitor oil smoking for example it is optional to use a monitor to measure PV (peroxide value). Process parameters can then be modulated to reduce or avoid oxidation (e.g. of the oil), e.g. stopping at a predetermined PV level. To monitor aqueous solutions, especially water, a probe is suitably employed to monitor pH. This can be used to stop smoking at a desired end pH indicative of a completed process or simply to end the smoking at a customer's desired pH.

Methods may comprise introducing smoke bubbles using an aerator, dividing the smoke from the chamber into smaller bubbles dispersed into the solution. An airstone or aspirator may be used. Preferred methods introduce bubbles, break them up and mix the vessel contents.

Preferably the smoking comprises filtering the smoke to reduce its PAH content, e.g. treating the smoke to selectively remove therefrom one or more PAHs that contain 4 or more benzene rings. In further preferred embodiments, the subject of examples below, filtration is applied to selectively remove benzo(a)pyrene, benz(a)anthracene and/or dibenz(a,h)anthracene from the smoke.

Smoke can be filtered by generating smoke in the presence of filter material and/or passing smoke through a filter. Suitably, fuel and filter material are both present in the chamber that provides the smoke source, and fuel is combusted in the presence of the filter, being intimately mixed therewith. This approach was used in the examples below.

Thus in preferred methods herein, the treating comprises removing one or more PAHs from the smoke using a filter. For example, the level of PAH is reduced by passing the smoke through a filter or directly contacting fuel with the filter.

The filter may be a natural or synthetic porous mineral. In particular, the mineral may be a zeolite. In a particularly preferred embodiment, the zeolite is clinoptilolite. Typically, for a filter separate from the fuel filter material in the form of powder or granules is packed into and retained in or on a filter holder such as a box or column. In preparation of filters for use in the invention, the filter material may also be combined with other components, e.g. with support material, with sand and/or iron salts.

Suitable filters remove from the smoke PAHs containing 4, 5 or more benzene rings, thus removing PAHs such as pyrene, benz(a)anthracene, naphthacene, chrysene, benzo(a)pyrene and dibenz(a,h)anthracene. Other suitable filters also remove PAHs containing 3 or more rings, thus removing PAHs such as anthracene, phenanthrene and 2-methyl anthracene.

Still further suitable filters may be used to also remove PAHs having just 2 rings. As will be appreciated, PAH size is related to but not directly proportional to the number of rings and a size exclusion filter that removes PAHs having 2 rings will also remove larger PAHs e.g. having 3, 4, 5 or more rings.

Pre-treatment of the filter may be employed to modify and preferably improve its properties and/or activity. The filter can be pre-treated by soaking in mild acid, preferably containing ammonium ions, suitably ammonium chloride. For example, the filter may be soaked in approximately 1 molar ammonium chloride, for instance for approximately 24 hours prior to use. Generally, the filter is dried prior to use.

A separate, also optional, though related step is to treat the filter by ion exchange so as to exchange sodium and/or calcium ions, e.g. in the zeolite, preferably clinoptilolite, with lithium, potassium or preferably ammonium ions. The filter can be treated with KOH, KCI, LiOH, LiCI or ammonium ions for this purpose, e.g. using ammonium chloride as described above and in more detail in specific embodiments below. Again, the filter material is generally dried prior to use.

A further separate, also optional but preferred, step is to heat the zeolite filters prior to or during use. Heat treatment assists filter performance, it is believed by opening channels in the filter material e.g. by removing water, and can be for an hour or more, a few hours or up to about 12 hours. An embodiment of the invention comprises pre-treating the filter by heating or baking at 150°C or higher, preferably 200°C or higher, typically at around 270°C or more. Baking / heating activates the filter in that it is better able to remove PAHs from smoke. The filter may also be baked / heated between batches of smoke treatment to re-activate the filter.

Suitably, the treating comprises filtering the smoke selectively to remove one or more PAHs that contain 3 or more benzene rings. Preferably, the treating comprises filtering the smoke or food selectively to remove one or more PAHs that contain 4 or more benzene rings. Typically, the method removes a plurality of the PAH compounds and in specific embodiments of the invention removal of substantially all of a large number of PAHs has been achieved. In embodiments of the invention, the one or more PAHs are selected from benzo(a)pyrene, benz(a)anthracene, benzo(b)fluoranthene, benzo(j)fluoranthene, benzo(k)fluoranthene, benzo(g,h,i)perylene, chrysene, cyclopenta(c,d)pyrene, dibenz(a,h)anthracene, dibenzo(a,e)pyrene, dibenzo(a,h)pyrene, dibenzo(a,i)pyrene, dibenzo(a,l)pyrene, indeno(1,2,3-cd)pyrene, benzo-(c)-fluorene or 5-methylchrysene. The method removes significant quantities of one or more of the PAHs, and preferably removes significant quantities of a plurality of the PAHs. In specific examples, described below, particular PAHs known to be carcinogenic are substantially removed but the smokey flavour is substantially unimpaired. Methods of the invention may thus comprise selectively removing the PAHs benzo(a)pyrene, benz(a)anthracene, dibenz(a,h)anthracene, two of those PAHs or all three. In particularly preferred embodiments, the method reduces the level of at least benzo(a)pyrene and/or benz(a)anthracene.

The agitation preferably breaks up the smoke into fine / tiny bubbles, promoting rapid dissolution of its contents. The agitation also mixes the smoke bubbles with and into the solution. Suitably the methods comprise breaking the smoke into bubbles of average diameter 10mm or less, 5mm or less, preferably 2mm or less, preferably 1 mm or less, 0.5mm or less and even smaller.

The apparatus used may comprise a mixer having a mixing head immersed in the solution. Methods can then comprise introducing the smoke into the solution at the mixing head while agitating the solution with the mixer so as to break up the introduced smoke into bubbles.

Operation of the method to agitate the solution and break up the bubbles may create reduced pressure at the point of smoke introduction, reduced compared with pressure at the smoke source. Hence, the method preferably comprises agitating the solution such that smoke is drawn into the mixing head. The mixer is suitably capable of operating so as to create reduced pressure in the solution to draw smoke into the solution in the smoking vessel. The method can be used unpressurised, e.g. with no need to pump smoke into the solution.

Suitable mixing heads comprise a mixing blade, and the method can then comprise introducing smoke in close proximity to the blade. Control of blade rotation can be used to control bubble size and incorporation of smoke into the solution

Preferred methods comprise introducing the smoke via a conduit, e.g. pipe, with an exit below the solution surface and close to a blade of the mixing head. The exit is immersed in the solution during operation. The mixing head may comprise a rotor blade (which moves) and a stator. Referring to examples below, in a preferred arrangement the pipe exit is attached to stator, hence being able to reliably deliver smoke to the desired location with respect to the moving blade(s).

Introducing the smoke close to the blade(s) increases break-up of the smoke, and methods suitably do so no more than 10cm from the blade(s), preferably no more than 3cm, more preferably no more than 2cm from the blade(s), most preferably no more than 1cm from the blade(s). Scale of apparatus can be relevant to the dimensions concerned. In small scale apparatus described below, smoke was bubbled into the solution approximately 6mm from the moving mixer blades.

In general, a wide range of mixers are suitable for the methods of the invention, meaning especially suitable for introducing smoke into the liquid to be smoked broken up into the form of multiple, small bubbles, with high surface area so that volatiles and smoke components are dissolved into the liquid more rapidly than with known passive smoking methods. The mixers may also be referred to as blenders that combine the smoke with the liquid; they generally comprise one or more, usually a plurality of, blades or vanes or impellers that move, commonly these rotate and are motor driven.

Preferred mixers have a mixing head including a rotor and a stator, and preferred methods and apparatus use a mixer such that the smoke can be introduced at the head and close to the rotor. Further preferred mixers comprise a conduit for smoke so that smoke can be pumped into and/or sucked into (e.g. operation of the rotor may create a partially negative pressure compared with pressure in the smoke generator) the liquid and delivered at the mixing head. In use of such mixers, smoke can be introduced into a region of turbulent flow at or around the mixing head, resulting in a greater degree of breaking the smoke into fine bubbles, increasing the rate of dissolution of smoke components. In an embodiment of the invention described in examples below, a pipe is provided (as part of the mixer, though this is not essential) with an outlet at the mixing head, close to (in the mixer used approximately 6mm from the moving mixer blade(s), though again this precise distance is not essential) the mixer blade(s) so that smoke is delivered into a region of turbulence during mixing, so that the smoke is rapidly and violently broken up in microbubbles; these microbubbles have small diameters, much smaller than the introduced smoke exiting the pipe, having diameters of 5mm or less, suitably 2mm or less, preferably 1mm or less, 0.5mm or less and even smaller.

A suitable mixer is made by Silverson®, named a Mixer Homogenizer, adapted to take a gaseous (i.e. smoke) input. The mixer workhead generates high shear rates in a three stage mixing/homogenizing process: a high speed rotor draws materials into the workhead, where the smoke and liquid are intensely mixed; centrifugal force then drives the materials to the periphery of the workhead and subjects them to mechanical shear in a gap between the rotor and stator; this is followed by hydraulic shear, as the product is forced through a stator screen at high velocity and circulated back into the mix. Fresh material is continually drawn into the workhead supplemented by smoke input.

Another particularly suitable mixer, used in examples below, is made by YTRON Process Technology GmbH & Co. KG, Germany, named the YTRON Y ByPass mixer, a range that comes in differing sizes and powers. These have a side pipe designed originally for powder or high viscosity products to be introduced directly into the liquid at the mixing head; in our adapted use of the mixers the pipe delivers the smoke to the head. The Y-tron allows for variable shear settings, e.g. by adjustment of impeller speed. In water smoking shear was adjusted by setting impeller speed to approx. 60 - 70 Hz. In other liquid smoking as described herein shear can be reduced, with the speed set lower, say to 30 - 60 Hz.

Mixer operation, whether low shear or high shear can create turbulence in the solution, and preferred methods comprise agitating the solution so as to create a region of turbulent flow in the solution and introducing the smoke into that region.

Known smoking methods are inefficient in that smoking takes a long time or uses only a small proportion of the smoke which, to avoid being wasted, has to be recirculated in complex, closed pipework in apparatus operated using special control equipment.

It is an advantage that the methods herein can be carried out without the need for closed equipment. Hence, preferred methods comprise venting the smoking vessel to the atmosphere. Emissions from typical fuels are generally not unduly toxic and venting directly to the outside is usually acceptable. The bubbling through the solution provides a significant extent of scrubbing. The methods may, however, also comprise scrubbing off-gas prior to venting, for example to remove identified combustion products not absorbed into the solution.

The methods comprise no recirculation of off-gas back through the solution. There is no need to do so when smoke incorporation into the solution is efficient, and the complication and expense of such recirculation piping etc. is avoided.

The degree of solution agitation may be adjusted, according to solution type, smoke flow, smoke content and other parameters. It is a feature of the invention that such adjustment can be carried out to provide an efficient process utilising a high proportion of the smoke generated in a single pass.

Preferred methods of the invention comprise monitoring the method and adjusting the agitation to reduce to a minimum the smoke bubbles that escape from the solution being smoked. Hence, smoke components are captured without any need for smoke recirculation (as noted above) and with no or minimal smoke waste. In examples of achieving such efficiencies, the methods may entail increasing the agitation until no or substantially no smoke bubbles escape. A further step may be, once this point is reached, to make a small reduction in agitation until smoke bubbles escaping begins to be noticeable. Thus, a user can increase the agitation (for example by increasing mixer speed or reducing smoke flow) until there is more or less no smoke passing through the solution. This may be seen as absence of frothing at the solution surface or absence of significant quantities of off-gas exiting e.g. via a venting chimney. This may be seen as only a tiny proportion of small bubbles reaching the solution surface. A small decrease in agitation, hence leading to a small but minimal level of bubbling at the surface, may then establish a desired throughput smoke level for long term and efficient operation of the method. In methods below calibration over several trial runs led to the combination of flow and agitation adopted in the examples.

In general, it is hence desired to capture a significant proportion of the smoke in a single pass. Suitably, the methods comprise agitating the solution so that 50% or less of the smoke bubbled into the solution escapes from the solution, preferably so that 30% or less of the smoke bubbled into the solution escapes from the solution, more preferably so that 20% or less of the smoke bubbled into the solution escapes from the solution. This proportion is even more preferably 10% or less and in specific examples carried out below we have estimated that smoke capture is at or exceeds 95%, i.e. 5% or less escapes the first pass bubbling.

The invention also provides smoked water and brine made by a method of the invention. These are useful in the food industry e.g. in sauce and marinade manufacturing, beverage manufacturing (e.g. flavouring for spirits), baking (e.g. add to dough when making pizza), sausage making, meat (e.g. ham and chicken) curing and as smoked water, without salt, for food flavouring.

Further provided by the invention is apparatus for smoking water and making brine according to all methods of the invention. Apparatus of embodiments of the invention, for treating a solution (e.g. comprising water and optional other components to make smoked water and/or brine for flavouring food), comprises:
a smoke chamber having an air input and a smoke output and in which fuel can be combusted to generate smoke;
a smoking vessel (e.g. pan) capable of holding the solution to be treated;
a mixer for mixing contents of the smoking vessel; and
a conduit from the output of the smoke chamber to the smoking vessel with an exit for introducing the smoke into the solution, below the surface of the solution;
wherein the mixer is adapted to agitate the solution so as to break up the introduced smoke into bubbles;
characterised in that there is no conduit permitting recirculation of off-gas back through the solution.

The water vessel can have a range of capacities and is not the object of the invention. Suitable pans are well known in the food industry and enable the smoking and mixing process to be carried out. Preferred vessels are partially or substantially wholly circular in cross section - during mixing in embodiments as described herein this shape enabled the mixed solution to rotate around a mixing head, giving extended residence times to bubbles and leading to improved dissolution of smoke volatiles.

Smoke can flow naturally into the mixer, and certain mixers as described elsewhere herein may exert a negative pressure to pull smoke into the solution. Preferably, smoke is pumped into, or additionally pumped into, the smoking vessel. This can be achieved in apparatus that comprise a pump, e.g. compressor, to force air into the chamber and force smoke into the smoking pan. Throughput rates can vary, and may depend upon apparatus scale. 10 L/minute and above, e.g. 50L/minute and above are suitable rates. In small scale apparatus we used about 125-130L/minute, though different flow rates will apply to different sizes and setups, especially higher flow rates for larger scale apparatus. These flow rates can be monitored and adjusted as part of adjusting the overall process to ensure a low level of smoke escaping from the smoked solution.

The apparatus preferably comprises a chimney to vent the smoking vessel directly to the atmosphere, and may comprise a unit to scrub off-gas prior to venting. As described in relation to the methods herein, the apparatus has no conduit permitting recirculation of off-gas back through the solution - the efficiency of the process means none is needed.

Monitoring and control equipment is suitably provided within the apparatus, for monitoring the method and adjusting the agitation to reduce to a minimum the smoke bubbles that escape from the solution being smoked. Operating the monitor and controls enables the user easily to control the process and achieve high efficiency smoking - e.g. increasing the agitation until no or substantially no smoke bubbles escape and then reducing the agitation until smoke bubbles escaping begins to be noticeable.

As per preferred methods, preferred apparatus use or comprise a filter for filtering the smoke before it is introduced into the solution. Filter features are suitable as described in relation to the methods of the invention.

Methods of the invention may operate so as to increase incorporation of smoke and/or smoke components into solution, and the methods suitably comprise cooling the solution and/or the smoke prior to and/or during smoking. Preferably, the solution is cooled during the smoking process. This may be achieved e.g. by cooling the chamber or vessel holding the solution. In specific examples, the chamber or vessel is cooled using a cooling jacket or blanket.

Methods of the invention can result in rapid incorporation of (relatively hot) smoke into solution, resulting in significant temperature rises not seen in known smoking processes. In trials in the absence of such cooling we unexpectedly encountered water temperatures in excess of 40°C. During smoking it is preferred that the solution is subjected to cooling so as to be maintained at or below 30°C, preferably below 20°C, more preferably below 15°C or below 10°C. An advantage of this cooling is that higher levels of gaseous smoke components can be dissolved. The methods of the present invention may thus achieve a fast and efficient transfer of smoke into solutions through a combination of increased smoke incorporation with cooling to increase the solubility of smoke components. Apparatus of the invention may comprise a cooler to cool the solution during smoking, optionally with a controller to maintain the solution at or below a desired temperature as per the above.

During operation, the apparatus preferably is loaded with, hence comprises, fuel mixed with filter material.

The apparatus preferably comprises a mixer adapted to break up smoke into tiny bubbles and homogenise them into the liquid rapidly and efficiently. Optional and preferred mixer features are as described above in relation to the methods of the invention.

In general, the fuel for the source of the smoke is not limited, provided that the smoke is regarded as useable for smoking food for human consumption, and hence for making smoked water and/or brine. Smoke is typically generated from a combustion material or fuel provided in a form that is relatively dry and can be combusted to yield smoke to generate smoke flavour. Common materials used in the industry for generating smoke are: wood chips, wood dust, wood shavings, wood briquettes, logs, charcoal and charcoal briquettes. In operation of the invention, we have successfully used oak, hickory, cherry, apple, beech wood, maple, manuka, pine, spruce, whiskey oak and woodland sage. Other suitable woods and other smoke sources include alder, barley, malted barley, black walnut, red oak, honey oak, walnut, cedar, chestnut, corn cobb, maple, mesquite, mulberry, orange, pear, pecan, plum, and sandalwood and also mixtures thereof. Other sources of smoke apart from wood include charcoal, herbs, tea and botanicals (optionally to provide additional flavouring in combination with one or more other sources).

Specific embodiments of the invention combine optional and/or preferred features as described herein, and hence a preferred method comprises:
(i) providing a source of smoke that has optionally been filtered to reduce its PAH content,
(ii) providing a smoking vessel (e.g. pan) containing the solution, and
(iii) introducing bubbles of smoke into the solution at a mixing head of a mixer and no more than 3cm from a blade of the mixer, while agitating the solution with the mixer blade so as to break up the introduced smoke into a plurality of bubbles of average diameter 2mm or less,
(iv)venting the smoking vessel to the atmosphere, and
(v) cooling the solution so as to maintain it at a temperature of 30°C or below.

The invention thus provides a method of mixing filtered, or unfiltered, smoke into liquids, such as water, using a mixer, specifically a YTRON-Y ByPass model, for use in the food industry.

Various concentrations of smoked water can be made for stronger or milder flavour, rated according to the level of filtration of the smoke and/or the duration of smoking (corresponding to flavour intensity). The higher the filtration rating the fewer carcinogens there are in the smoke used.

The smoking technique can be used to flavour water, brine, oils, solvents, sugar and salt solutions.

The time needed for smoking liquids, e.g. water, can hence be significantly reduced by the invention.

An advantage of filtered embodiments of the invention is the retention of desirable flavours, while removing some or most or substantially all of certain larger, undesired PAHs - found especially in wood smoke. The treating optionally comprises filtering the smoke selectively to remove the PAHs that contain 4 or more benzene rings compared with removal of naphthalene and/or phenanthrene. Generally, the treating comprises filtering the smoke selectively to remove the PAHs that contain 4 or more benzene rings compared with removal of smoke-flavoured components from the smoke or food. In preferred embodiments of the invention, exemplified in examples below, the treating comprises filtering the smoke or food selectively to remove the PAHs that contain 4 or more benzene rings without significantly changing the volatile profile of the smoke compared with unfiltered smoke.

Further advantages of the invention, illustrated in embodiments described herein are enhancement of flavour in the products obtained. The examples showed flavour improvements, including one or more of tar removal, reduced acidity, reduced acridity, and/or reduced PAH - dependent upon the combustion material. When using filtered smoke, it is found that the smoking generated significantly reduced carbonic acid levels (due to reduced amounts of dissolved CO₂) compared with smoking using unfiltered smoke (i.e. prior art smoke). Testing of products comparable with known smoked products (but prepared with unfiltered smoke) has indicated higher pH due to reduced acidity caused by reduced levels of acid-forming combustion products (such as CO₂). In one example, PST50 filtration reduced carbonic acid to 15% of the levels in a control smoked with unfiltered smoke, with the product having pH increased approximately 0.5 to 1.0 pH units. Also, reduced acridity, meaning reduced bitter or pungent taste, is particularly significant for consumers. The smoked solutions had higher pH than known smoked water, i.e. the invention produces less acidic products. Preferred products have pH 4.5 or greater, 5 or greater or 5.5 or greater.

The invention is now described in specific examples with reference to the accompanying drawings in which:

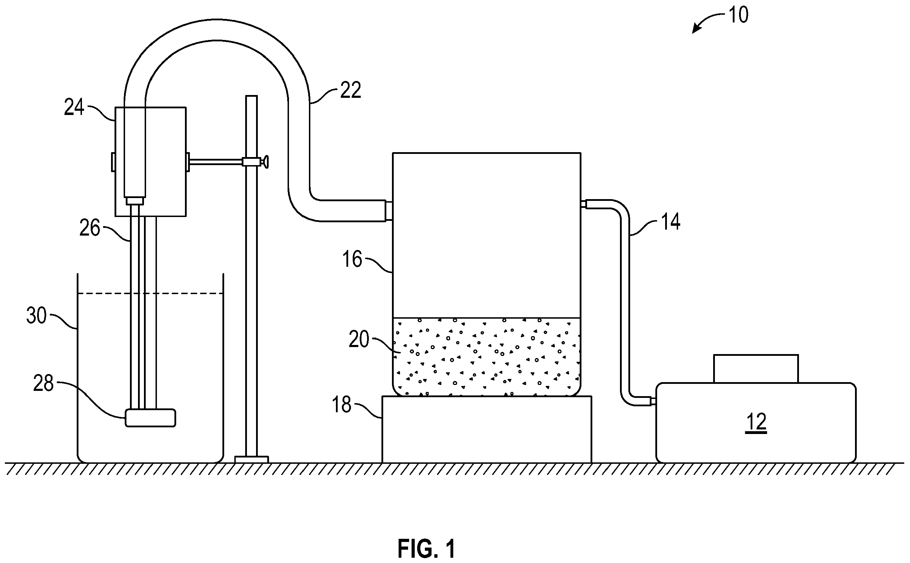

Fig. 1 shows a schematic diagram of a laboratory-scale smoker of the invention;

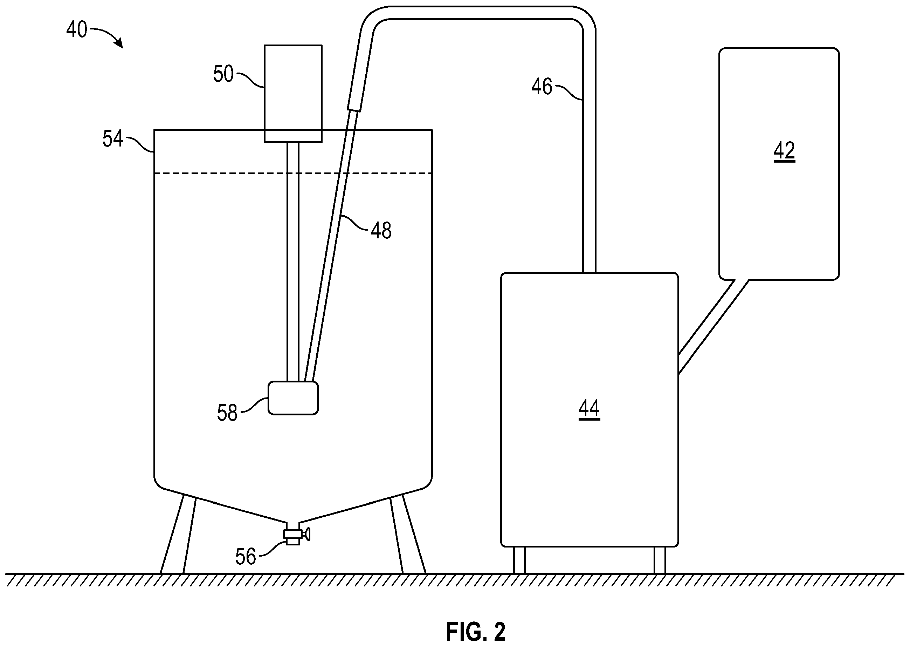

Fig. 2 shows a schematic diagram of an industrial-scale smoker of the invention;
Fig. 3 shows a star diagram of the results of testing mouthfeel and after effects of chicken brined in water smoked according to the invention: A smoked with no filtration, B-D increased levels of filtration from B to D;
Fig. 4 shows a star diagram of the results of testing taste of chicken brined in water smoked according to the invention: A smoked with no filtration, B-D increased levels of filtration from B to D;
Fig. 5 shows a star diagram of the results of testing flavour of chicken brined in water smoked according to the invention: A smoked with no filtration, B-D increased levels of filtration from B to D;
Fig. 6 shows a plot of smoking time (hours) vs pH of smoked water, comparing the smoking method of the invention with the smoking method described in US 2012/0207898; and
Fig. 7 shows a plot of smoking time (hours) vs luminosity of smoked water, comparing the smoking method of the invention with the smoking method described in US 2012/0207898.

### Examples

### Example 1 - Laboratory Scale Water Smoker

We developed a water smoker 10 for preparation of smoked water, calibrated it, made smoked water, brined chicken in the smoked water and tested the chicken.

A compressor 12 was linked by pipe 14 to airtight smoke chamber (approx. 100 litres) 16, containing combustible material 20 (wood dust optionally with added filter material). The chamber smoke output was in turn linked to the stator portion of mixing head 28 of a YTRON® Y-ByPass mixer 24 via silicone rubber linking tube 22 and bypass pipe 26. The mixer is approximately 0.6m tall with a power of 4.5KW. The mixing head 28 is submerged during operation in water in a circular cross-section water pan (approx. 15 litres) 30.

Calibration Run - we smoked water using the apparatus for periods varying from 1 hour to 24 hours and compared the intensity of the product with conventionally obtained smoked water made in-house by the inventor using static water trays. Air was flowed into the smoke chamber 16 at approximately 127 litres per minute. Oak dust was placed in the bottom of the chamber (replenished as required) and electrical heat source 18 was switched on to ignite the dust, producing smoke. The air flow directed smoke to the mixing head via the linking tube and the bypass pipe. The mixer was turned on and also exerted a low level of suction, thus drawing smoke down the bypass pipe and into the water in the pan. The bypass pipe exit was of diameter approx. 25mm and was located approximately 6mm above the spinning impellers (set to approx. 60 Hz) of the mixer inside the mixing head, delivering the chamber output smoke right into the centre of the mixing; as the impellers span the smoke was intimately homogenised into tiny bubbles at the centre of the mixing head, with frothing seen at and around the head and at the water surface. Tiny bubbles were also seen dispersed throughout the water, swirling in the mixed water, having long residence times before rising to the surface. The few bubbles of smoke passing through the solution escaped into the atmosphere directly.

The smoked water made by smoking for 6 hours according to the invention was found comparable to water smoked in trays in a smoker for 4 days.

Brine for brining chicken was then prepared as follows. Air was flowed into the smoke chamber 16 as before. Initially, 2kg of oak dust was placed in the bottom of the chamber and electrical heat source 18 was switched on to ignite the dust, producing smoke. This amount of dust was by then known to burn for approximately 4 hours so after a little less than 4 hours a further 1Kg of dust was added to give a total burn time of approximately 6-7 hours.

The smoking and mixing was continued for approximately 6 hours, then the compressor and mixer switched off and the remaining dust left to extinguish by cutting off the air supply.

Run A - The smoked water was removed and then used as brine for chicken pieces, which were left to soak in the smoked water for 24 hours. This run was referred to as unfiltered.

Runs B-D - The process was then repeated, with alternative fuel sources (retaining the same amount of oak but supplemented with clinoptilolite filter as described in WO 2015/007742), these runs being referred to as with increasing levels of filtration:
B oak dust plus clinoptilolite at weight ratio 4:1 ("PST 25")
C oak dust plus clinoptilolite at weight ratio 2:1 ("PST 50")
D oak dust plus clinoptilolite at weight ratio 1:1 ("PST 100")

The chicken pieces from the brines of runs A-D were then tested as now described, with reference to fig.s 3, 4 and 5.

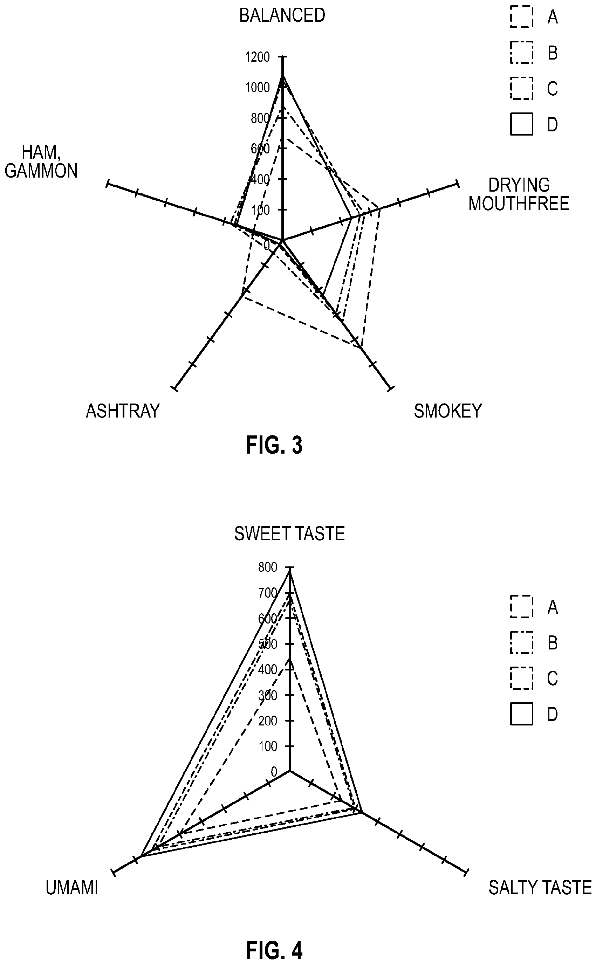

Fig. 3 shows a star diagram of the results of a sensory panel tasting of the chicken for mouthfeel and after effects. The more filtration that was introduced the more balanced the flavour became, with less acrid 'ash tray' qualities.

Fig. 4 shows a star diagram of the results of a sensory panel tasting of the chicken for overall taste. These results recorded a more desirable flavour profile for runs B-D, D scoring highest, complementing the chicken by improving the umami, salt and sweet flavour character.

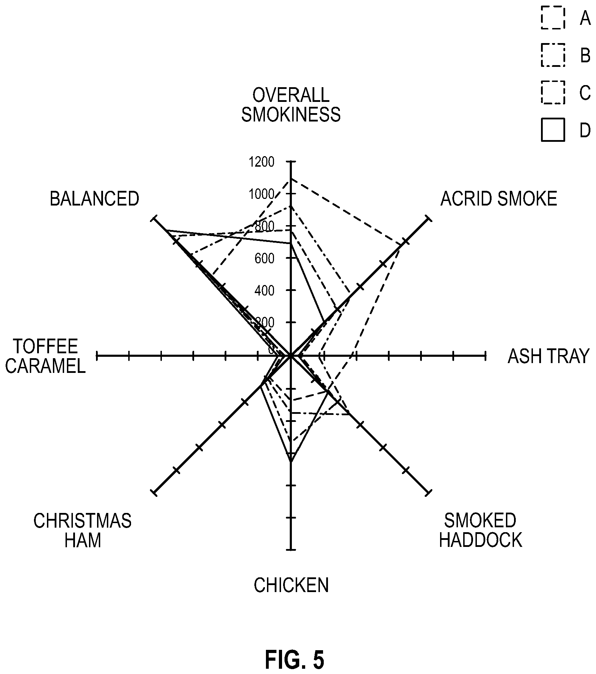

Fig. 5 shows a star diagram of the results of a sensory panel tasting of the chicken for flavour. Interestingly, the panel reported an improved balance of flavours, which allowed the chicken flavour to come through whilst reducing the flavours associated with acridity, smokiness, 'ash tray' character and smoked fish.

### Example 2 - Industrial Scale Water Smoker

An industrial scale water smoker 40 was designed for larger scale water smoking.

Combustible materials (e.g. wood, botanicals) are fed from container 42 into industrial smoke generator 44. The smoke passes through linking pipe 46 to bypass pipe 48, which delivers the smoke directly into the mixing head 58 of large scale homogeniser 50. We designed this smoker to work with a known YTRON® Y-ByPass mixer of power 11.5KW. The mixing head 58 is suspended in a water vessel 54 containing up to 5,000 litres of liquid. The smoked liquid is collected from the vessel 54 by tap 56. Bubbles of smoke passing through the solution are vented directly to the atmosphere via a short chimney (not shown). The chimney allows for inclusion off-gas scrubbing units if desired, e.g. according to local emissions regulations.

### Example 3 - pH Testing Of Smoked Water

We smoked water as per the prior art method referred to the calibration run of Example 1 and compared its pH with water smoked according to the invention using no filtration and then filtration levels PST25 and PST50. The filtered, smoked water of the invention had higher pH, i.e. was less acidic, than known smoked water:

| Smoked Water (prior art) | pH |
|---|---|
| Standard tray-smoked water | 3.9 |

### Smoked Water (invention)

| | |
|---|---|
| No filtration | 3.9 |
| PST25 | 4.5 |
| PST50 | 5.7 |

### Example 4 - Smoked Oil

We smoked sunflower oil following the method of Example 1 of the invention, modified as follows: 8 litres of oil, 3 kg of wood, Y-tron mixer set at 22Hz after trials at different settings, air flow as before. This combination gave little throughput of smoke to the vent. With this set up oil was smoked unfiltered and filtered with PST25.

Oil samples were tested and found to make a pleasant smoky flavour.

### Example 5 - Comparative Study

We compared the efficiency of the smoking method of the invention with smoking methods known in the prior art. Specifically, the prior art smoking method involved passively introducing small bubbles of smoke into the water, as in US 2012/0207898.

As in Example 1, a compressor 12 was linked by pipe 14 to airtight smoke chamber (approx. 100 litres) 16, containing combustible material 20 (wood dust). The chamber smoke output was in turn linked to the stator portion of mixing head 28 of a YTRON® Y-ByPass mixer 24 via silicone rubber linking tube 22 and bypass pipe 26. The mixer is approximately 0.6m tall with a power of 4.5KW. The mixing head 28 is submerged during operation in water in a circular cross-section water pan (approx. 15 litres) 30.

Air flowed into the smoke chamber 16 at approximately 127 litres per minute. Oak dust was placed in the bottom of the chamber (replenished as required) and electrical heat source 18 was switched on to ignite the dust, producing smoke. The air flow directed smoke to the mixing head via the linking tube and the bypass pipe. The mixer was turned on and also exerted a low but notable level of suction, thus drawing smoke down the bypass pipe and into the water in the pan. The bypass pipe exit was of diameter approx. 25mm and was located approximately 6mm above the spinning impellers (set to approx. 60 Hz) of the mixer inside the mixing head, delivering the chamber output smoke right into the centre of the mixing; as the impellers span the smoke was intimately homogenised into tiny bubbles at the centre of the mixing head, with frothing seen at and around the head and to a lesser extent at the water surface. Tiny bubbles were also seen dispersed throughout the water, swirling in the mixed water, having long residence times before rising to the surface. The few bubbles of smoke passing through the solution were vented into the atmosphere directly.

In the comparative run, water was smoked in the same way (fuel, amount of fuel, air flow, water pan, smoke chamber etc.) but instead with the chamber smoke output linked to a perforated nozzle submerged in the water pan. The perforated nozzle was configured to closely simulate the effect of the mesh used in US 2012/0207898, thereby breaking up the smoke into fine bubbles as the smoke entered the water. It was felt not necessary to replicate the closed nature of the system of US 2012/0207898, as this feature was determined to have no or insignificant bearing on the rate at which smoke is introduced into the water; rather, the closed system acts to reduce fuel consumption by re-circulating generated smoke multiple times. It is arguable, even, that the replication carried out in this comparative study is more effective than the setup in US 2012/0207898 at introducing smoke into water quickly; this is because newly generated smoke, containing a higher saturation of smoke components than recirculated smoke, is continually being introduced to the water.

During smoking, all parameters were controlled and matched between the respective methods. Continuous pH measurement was performed using an Edge pH meter (Hanna Instruments). Colour measurements were taken under standard illumination and analysed using the Pantone application. Sensory analysis was also performed.

Statistical analysis was carried out using ANOVA in combination with a post-hoc Tukey test. The results are shown in Fig.s 6 and 7. Results are presented as mean +/- standard deviation and are considered significant when p < 0.05.

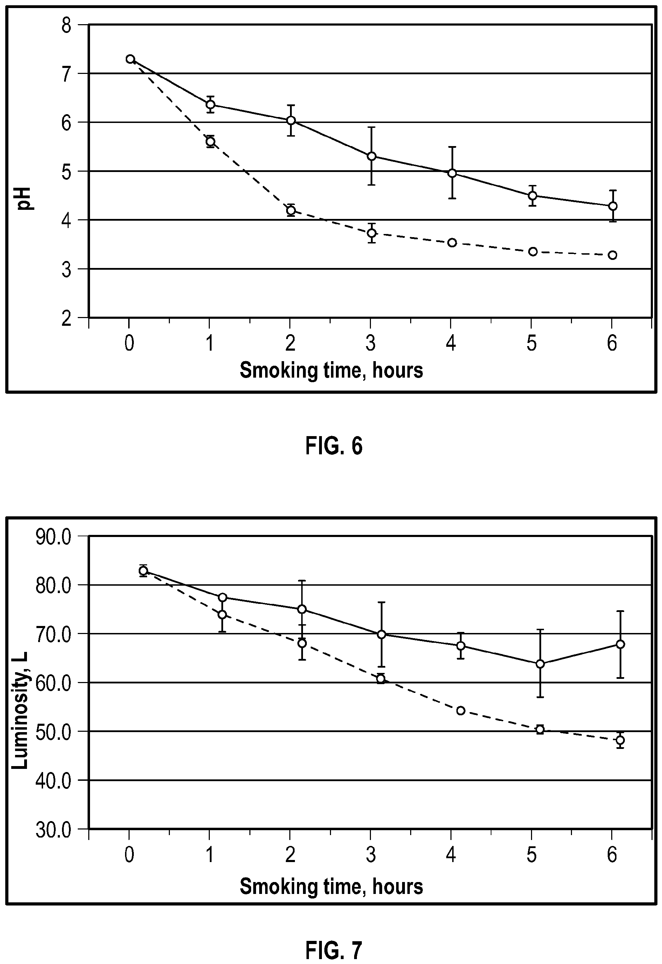

As illustrated in Fig. 6, a faster decrease in the pH of smoked water is observed when using the smoking method of the invention (dashed line), opposed to the passive bubbling method of the prior art (solid line).

Commercially, smoked water is commonly sold at a pH of around 4.0. Using the smoking method of the invention, this pH was reached after around 2 hours of smoking, whereas the prior art method as per the reproduction herein required 6 hours of smoking to achieve a similar decrease in the pH of the water. Furthermore, it was observed that pH starts to plateau at around pH 4 using the reproduced prior art smoking method, whereas using the smoking method of the invention the pH started to plateau at around pH 3. This suggests that a more concentrated smoked water is achievable using the smoking method of the invention.

Luminosity of the smoked water is outlined in Fig. 7. It is observed that the luminosity of the water smoked using the smoking method of the invention (dashed line) decreases more quickly than when the water is smoked using the reproduced prior art smoking method (solid line). As a decrease in luminosity represents a higher degree of smoke integration into the water, these data confirm that the smoking method of the invention was a more powerful and more time-efficient method. Again, it is shown that a similar luminosity (-67) is achieved after 2 hours using the smoking method of the invention, versus 6 hours using the smoking method of the reproduced prior art. Additionally, it is observed that a far lower luminosity (-46) is achievable when water is smoked for 6 hours using the smoking method of the invention.

Furthermore, in respect of both pH and colour (luminosity) measurements, the results obtained for each hourly time point demonstrate a higher degree of reliability between individual experiments (n=3) for the smoking method of the invention. This can be seen in Fig.s 6 and 7, respectively, which both clearly show reduced standard deviation from the mean for the smoking method of the invention (dashed line) versus the prior art smoking method (solid line), indicating the invention provides a consistent and reproducible process.

The pH and colour measurements described above correlate strongly with sensory data obtained and illustrated in Tables 1 and 2:-

**Table 1 - Sensory analysis of samples smoked with the smoking method of the invention.**

| **Sample** | **Colour** | **Aroma** | **Taste** |
|---|---|---|---|
| **1 hr** | Pale yellow, straw-coloured | Mild smoke. | Mild smoky taste. Slightly oily. |
| **2 hrs** | Light-yellow | Mild smoke. | Mildly acidic, smoky. |
| **3 hrs** | Light-yellow | Smoky. | Acidic, smoky, slightly |
| | | | bitter. |
| **4 hrs** | Rich yellow | Very smoky. | Very acidic, smoky, bitter. |
| **5 hrs** | Light-amber | Very smoky, slightly woody. | Very acidic, very smoky, bitter. |
| **6 hrs** | Amber | Very smoky, woody, rich. | Very acidic, very smoky, bitter, oily. |

**Table 2 - Sensory analysis of samples smoked with the reproduced smoking method of the prior art.**

| **Sample** | **Colour** | **Aroma** | **Taste** |
|---|---|---|---|
| **1 hr** | Very pale yellow | Hardly detectable smoke | Mild smoke |
| **2 hrs** | Very pale yellow | Hardly detectable smoke | Mild smoke |
| **3 hrs** | Pale yellow | Very mild smoke flavour | Mild smoke |
| **4 hrs** | Pale yellow | Mild smoke | Smoky |
| **5 hrs** | Pale yellow | Mild smoke | Mildly acidic, slightly smoky |
| **6 hrs** | Pale yellow | Mild smoke | Mildly acidic, slightly smoky |

The smoking method of the invention can thus be used to produce smoked water quickly and easily.

Accordingly, the invention provides methods and apparatus for smoking water, especially using filtered smoke.

### Parts List for Smokers

- 10: water smoker
- 12: compressor
- 14: connection pipe
- 16: smoking chamber
- 18: heat source
- 20: combustible material
- 22: connection tube
- 24: homogeniser
- 26: bypass pipe
- 28: mixing head
- 30: water pan
- 40: industrial water smoker
- 42: combustible material container
- 44: industrial smoke generator
- 46: connection pipe
- 48: bypass pipe
- 50: homogeniser
- 58: mixing head
- 54: liquid vessel
- 56: tap

## Claims

1. A method of treating a solution, comprising:
(i) providing a source of smoke,
(ii) providing a smoking vessel (e.g. pan) containing the solution, and
(iii) introducing bubbles of smoke into the solution while agitating the solution so as to break up the introduced smoke into a plurality of smaller bubbles;
**characterised in that** there is no recirculation of off-gas back through the solution.

2. A method according to claim 1 comprising filtering the smoke to reduce its PAH content.

3. A method according to any previous claim, comprising generating smoke in the presence of filter material and/or passing smoke through a filter.

4. A method according to any previous claim, comprising breaking the smoke into bubbles of average diameter 2mm or less.

5. A method according to any previous claim, comprising introducing the smoke into the solution at a mixing head of a mixer while agitating the solution with the mixer so as to break up the introduced smoke into bubbles.

6. A method according to any previous claim, comprising venting the smoking vessel to the atmosphere.

7. A method according to any previous claim, comprising monitoring the method and adjusting the agitation to reduce to a minimum the smoke bubbles that escape from the solution being smoked.

8. A method according to any preceding claim, comprising cooling the solution so as to maintain it at a temperature of 30°C or below.

9. A method according to any preceding claim, comprising cooling the solution so as to maintain it at a temperature of 20°C or below.

10. A method according to any preceding claim, comprising:
(i) providing a source of smoke that has been filtered to reduce its PAH content,
(ii) providing a smoking vessel (e.g. pan) containing the solution,
(iii) introducing bubbles of smoke into the solution at a mixing head of a mixer and no more than 3cm from a blade of the mixer, while agitating the solution with the mixer blade so as to break up the introduced smoke into a plurality of bubbles of average diameter 2mm or less,
(iv)venting the smoking vessel to the atmosphere, and
(v) cooling the solution so as to maintain it at a temperature of 30°C or below.

11. A method according to any previous claim, wherein the solution is water or brine.

12. A method according to any of claims 1-10, wherein the solution is propylene glycol.

13. Apparatus for treating a solution, comprising:
a smoke chamber having an air input and a smoke output and in which fuel can be combusted to generate smoke;
a smoking vessel (e.g. pan) capable of holding the solution to be treated;
a mixer for mixing contents of the smoking vessel;
a conduit from the output of the smoke chamber to the smoking vessel with an exit for introducing the smoke into the solution, below the surface of the solution;
wherein the mixer is adapted to agitate the solution so as to break up the introduced smoke into bubbles;
**characterised in that** there is no conduit permitting recirculation of off-gas back through the solution.

14. Apparatus according to claim 13, wherein the mixer comprises a mixing head having a rotor blade.

15. Apparatus according to claims 13 or 14 comprising a cooler to cool the solution during smoking, optionally with a controller to maintain the solution at or below a desired temperature.

## Patentansprüche

1. Verfahren zum Behandeln einer Lösung, umfassend:
(i) Bereitstellen einer Rauchquelle,
(ii) Bereitstellen eines Rauchgefäßes (z. B. einer Pfanne), das die Lösung enthält, und
(iii) Einbringen von Rauchblasen in die Lösung, während die Lösung gerührt wird, um den eingebrachten Rauch in mehrere kleinere Blasen aufzubrechen;
**dadurch gekennzeichnet, dass** kein Abgas durch die Lösung zurückgeführt wird.

2. Verfahren nach Anspruch 1, umfassend das Filtern des Rauches, um seinen PAK-Gehalt zu verringern.

3. Verfahren nach einem der vorhergehenden Ansprüche, umfassend das Erzeugen von Rauch in Gegenwart von Filtermaterial und/oder das Durchleiten von Rauch durch einen Filter.

4. Verfahren nach einem der vorhergehenden Ansprüche, umfassend das Aufbrechen des Rauches in Blasen mit einem durchschnittlichen Durchmesser von 2 mm oder weniger.

5. Verfahren nach einem der vorhergehenden Ansprüche, umfassend das Einbringen des Rauches in die Lösung an einem Mischkopf eines Mischers, während die Lösung mit dem Mischer gerührt wird, um den eingebrachten Rauch in Blasen aufzubrechen.

6. Verfahren nach einem der vorhergehenden Ansprüche, umfassend das Entlüften des Rauchgefäßes in die Atmosphäre.

7. Verfahren nach einem der vorhergehenden Ansprüche, umfassend das Überwachen des Verfahrens und das Einstellen des Rührens, um die Rauchblasen, die aus der Lösung entweichen, die geräuchert wird, auf ein Minimum zu reduzieren.

8. Verfahren nach einem der vorhergehenden Ansprüche, umfassend das Abkühlen der Lösung, um sie auf einer Temperatur von 30 ° C oder darunter zu halten.

9. Verfahren nach einem der vorhergehenden Ansprüche, umfassend das Abkühlen der Lösung, um sie auf einer Temperatur von 20 °C oder darunter zu halten.

10. Verfahren nach einem der vorhergehenden Ansprüche, umfassend:
(i)Bereitstellen einer Rauchquelle, die gefiltert wurde, um ihren PAK-Gehalt zu verringern;
(ii)Bereitstellen eines Rauchgefäßes (z. B. einer Pfanne), das die Lösung enthält,
(iii) Einbringen von Rauchblasen in die Lösung an einem Mischkopf eines Mischers und nicht mehr als 3 cm von einem Blatt des Mischers entfernt, während die Lösung mit dem Mischerblatt gerührt wird, um den eingebrachten Rauch in mehrere Blasen mit durchschnittlichem Durchmesser 2 mm oder weniger aufzubrechen,
(iv)Entlüften des Rauchgefäßes in die Atmosphäre und
(v) Abkühlen der Lösung, um sie auf einer Temperatur von 30 ° C oder darunter zu halten.

11. Verfahren nach einem der vorhergehenden Ansprüche, wobei die Lösung Wasser oder Salzlauge ist.

12. Verfahren nach einem der Ansprüche 1 bis 10, wobei die Lösung Propylenglykol ist.

13. Vorrichtung zum Behandeln einer Lösung, umfassend:
eine Rauchkammer, die einen Lufteinlass und einen Rauchausgang aufweist, in der Kraftstoff zur Erzeugung von Rauch verbrannt werden kann;
ein Rauchgefäß (z. B. eine Pfanne), das die zu behandelnde Lösung aufnehmen kann; einen Mischer zum Mischen von Inhalten des Rauchgefäßes;
eine Leitung vom Ausgang der Rauchkammer zum Rauchgefäß mit einem Ausgang zum Einbringen des Rauches in die Lösung unterhalb der Oberfläche der Lösung;
wobei der Mischer angepasst ist, um die Lösung zu rühren, um den eingebrachten Rauch in Blasen aufzubrechen;
**dadurch gekennzeichnet, dass** es keine Leitung gibt, die eine Rückführung des Abgases durch die Lösung ermöglicht.

14. Vorrichtung nach Anspruch 13, wobei der Mischer einen Mischkopf umfasst, der ein Rotorblatt aufweist.

15. Vorrichtung nach Anspruch 13 oder 14, umfassend einen Kühler zum Abkühlen der Lösung während des Rauchens, optional mit einer Steuerung, um die Lösung auf oder unter einer gewünschten Temperatur zu halten.

## Revendications

1. Procédé de traitement d'une solution, comprenant :
(i) la fourniture d'une source de fumée,
(ii) la fourniture d'un récipient à fumer (par exemple un bac) contenant la solution, et
(iii) l'introduction de bulles de fumée dans la solution tout en agitant la solution de façon à fragmenter la fumée introduite en une pluralité de bulles plus petites ;
**caractérisé en ce qu'**aucune recirculation d'effluents gazeux à travers la solution n'est présente.

2. Procédé selon la revendication 1, comprenant le filtrage de la fumée pour réduire sa teneur en hydrocarbure aromatique polycyclique (HAP).

3. Procédé selon l'une quelconque des revendications précédentes, comprenant la génération de fumée en présence d'un matériau filtrant et/ou le passage de la fumée à travers un filtre.

4. Procédé selon l'une quelconque des revendications précédentes, comprenant la fragmentation de la fumée en des bulles de diamètre moyen inférieur ou égal à 2 mm.

5. Procédé selon l'une quelconque des revendications précédentes, comprenant l'introduction de la fumée dans la solution au niveau d'une tête de mélange d'un mélangeur tout en agitant la solution avec le mélangeur de façon à fragmenter la fumée introduite en des bulles.

6. Procédé selon l'une quelconque des revendications précédentes, comprenant la ventilation du récipient à fumer dans l'atmosphère.

7. Procédé selon l'une quelconque des revendications précédentes, comprenant la surveillance du procédé et le réglage de l'agitation pour réduire au minimum les bulles de fumée qui s'échappent de la solution à fumer.

8. Procédé selon l'une quelconque des revendications précédentes, comprenant le refroidissement de la solution de façon à la maintenir à une température inférieure ou égale à 30°C.

9. Procédé selon l'une quelconque des revendications précédentes, comprenant le refroidissement de la solution de façon à la maintenir à une température inférieure ou égale à 20°C.

10. Procédé selon l'une quelconque des revendications précédentes, comprenant :
(i) la fourniture d'une source de fumée qui a été filtrée pour réduire sa teneur en HAP,
(ii) la fourniture d'un récipient à fumer (par exemple un bac) contenant la solution,
(iii) l'introduction de bulles de fumée dans la solution au niveau d'une tête de mélange d'un mélangeur et à 3 cm au plus d'une pale du mélangeur, tout en agitant la solution avec la pale de mélangeur de façon à fragmenter la fumée introduite en une pluralité de bulles de diamètre moyen inférieur ou égal à 2 mm,
(iv) la ventilation du récipient à fumer dans l'atmosphère, et
(v) le refroidissement la solution de façon à la maintenir à une température inférieure ou égale à 30°C.

11. Procédé selon l'une quelconque des revendications précédentes, ladite solution étant de l'eau ou de la saumure.

12. Procédé selon l'une quelconque des revendications 1 à 10, ladite solution étant du propylène glycol.

13. Appareil destiné à traiter une solution, comprenant :
une chambre à fumée possédant une entrée d'air et une sortie de fumée et dans laquelle du combustible peut être brûlé pour générer de la fumée ;
un récipient à fumer (par exemple un bac) capable de contenir la solution à traiter ; un mélangeur destiné à mélanger le contenu du récipient à fumer ;
un conduit allant de la sortie de la chambre à fumée au récipient à fumer avec une sortie pour introduire la fumée dans la solution, sous la surface de la solution ;
ledit mélangeur étant adapté pour agiter la solution de façon à fragmenter la fumée introduite en des bulles ;
**caractérisé en ce qu** 'aucun conduit permettant la recirculation des effluents gazeux à travers la solution n'est présent.

14. Appareil selon la revendication 13, ledit mélangeur comprenant une tête de mélange possédant une pale de rotor.

15. Appareil selon les revendications 13 ou 14, comprenant un refroidisseur pour refroidir la solution durant le fumage, éventuellement avec un dispositif de commande pour maintenir la solution à une température désirée ou en dessous celle-ci.
